# EUROPEAN PATENT SPECIFICATION

(11) **EP 1 780 941 B1**
(45) Date of publication and mention of the grant of the patent: **22.07.2009**
(21) Application number: 05077477.7
(22) Date of filing: 31.10.2005
(51) Int. Cl.: H04L 12/24

(54) **Network configuration**
Netzwerkkonfiguration
Configuration de réseau

(43) Date of publication of application: 02.05.2007
(73) Proprietor: PacketFront Systems AB, 164 40 Kista (SE)
(72) Inventor: Öman, Andreas, 12846 Bagarmossen (SE); Lundström, Magnus, 12152 Johanneshov (SE); Skäre, Tomas, 13643 Handen (SE)
(74) Representative: Hyden, Martin Douglas

(56) References cited:
- WO-A-01/26336
- US-A1- 2003 023 711

## Description

### Technical field

This invention related to methods of configuring networks such as broadband communication networks.

### Background art

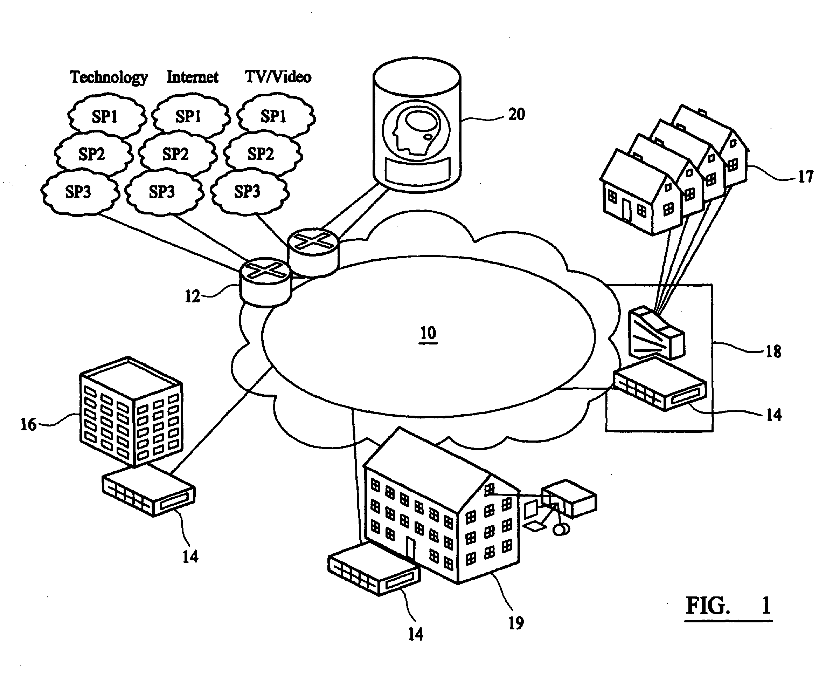

Figure 1 shows a generic description of a broadband network for providing telephone, internet and TV/video services to subscribers in a number of locations. A series of service providers provide the various services (SP1, SP2, SP3) to the network 10 via conventional access points 12. The network 10 provides connects these to subscribers via routers 14 located close to the subscribers. These can include business locations that can include routers in commercial property 16, and domestic subscribers with routers located in a central office 18 for a neighbourhood of separate dwellings (houses 17), or in a single building 19 such as an apartment building.

Operation of the network is controlled by a control and provisioning system 20 that configures the various elements of the network to operate in the desired manner.

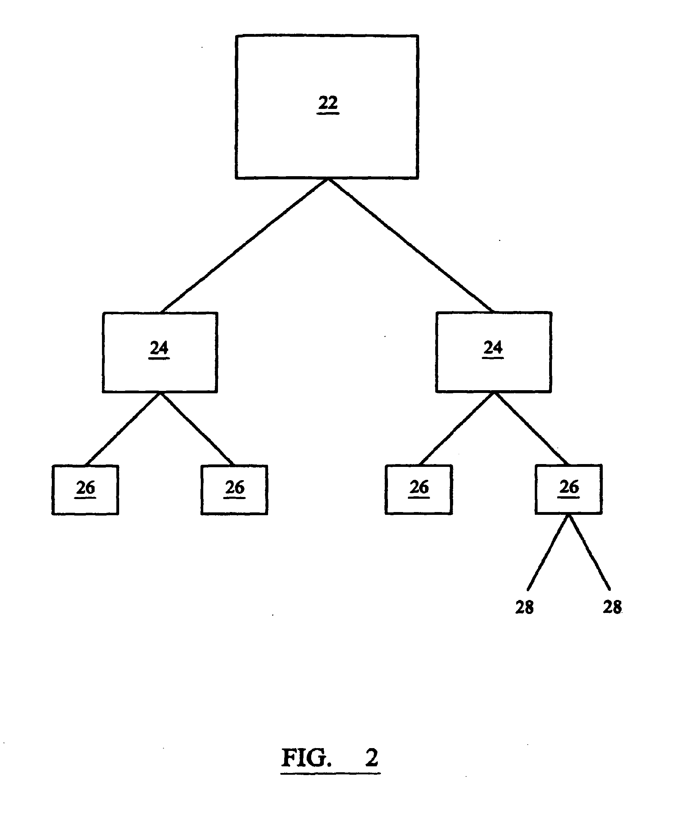

For the function of the control and provisioning system 20, the network can be considered in an abstract way as comprising a core 22 having one or more cells 24, each cell having one or more network elements 26 as is shown in Figure 2. Subscribers 28 connect to the network elements 26. This structure is not to be confused with the physical elements making up the network. The functional blocks 22, 24, 26 may be wholly or partly resident in the same or different physical elements, depending on the exact size and makeup of the network in question, although typically, each network element 26 will comprise a router.

The operator manages the network function by use of the control and provisioning system 20 which has the functions of establishing the function of each network element 26 and establishing and managing user function and operation. The primary control is effected at the level of the core 22 which defines the topology and configuration of the network, including configuring physical or logical links, assigning IP addresses and making particular service available to users connecting to the network. In an existing system, the data for configuration of the network is held in a core database accessed via an application program interface (API). On start-up, the network module contains no configuration data. As and when required, for example on connection of a new device to the network module, the network module interrogates the database and caches the necessary configuration data locally where it remains until changed. When a change is made to the network configuration, the change is made to the database and an alert sent out over the network to the network modules, which in turn interrogate the database to find the changed information which is then loaded into a corresponding database in the network module where the changed data is cached (the network module database has the same basic structure as the core database but is only populated with data required to configure that network module and its associated network elements).

Document WO 01/26336 discloses a system for distributing configuration information using configuration trees that are sent as local configurations to local network elements.

The problem with this existing system is that configuration is an essentially manual operation, each change requiring operator intervention. Also, it is possible to change the configuration to include inoperable changes (errors) which, in turn, require manual correction. It is an object of this invention to provide a system that is relatively easy to configure and manage.

### Disclosure of the invention

This invention relates to networks for providing services to subscribers, the network including a configuration system comprising: a core; at least one cell connected to the core; and at least one network element connected to the cell, each network element supporting a number of subscribers for provision of the services.

One aspect of the invention comprises a method of configuring a network comprising: creating, in the configuration system core, an overall configuration tree that describes all services available to the subscribers; and the location of each individual subscriber in the network and the particular services to which it subscribes; providing each cell with a local configuration tree comprising that part of the overall configuration tree that describes all services available to the subscribers connected to network elements in that cell; and the location of each individual subscriber in that cell and the particular services to which it subscribes; and configuring each network element according to the local configuration tree in its respective cell.

Preferably, the steps of creating the overall configuration tree and providing each cell with a local configuration tree comprise creating and providing tolopogical information concerning the network.

The configuration trees typically comprise a series of objects located at different levels, each object comprising a function and parameters required to fulfil that function.

The method also preferably comprises rendering the local configuration tree into configuration commands and data in the cell, and deploying the configuration commands and data from the cell into the network elements and subscribers.

Any changes to the local configuration tree can be verified in the cell and are only deployed into the network elements and subscribers once verified as correct.

The local configuration tree is typically provided to the cell in a generic format, and the configuration commands deployed in a device specific format.

In one embodiment, the method can include changing the overall configuration tree in response to communications received by the core from a cell; providing a local configuration tree to the cell including the change, and deploying the changed configuration into the network elements. This can further comprise communicating information from the network element to the cell.

An external service provider can also change the overall configuration tree in the control system core by means of an external link to the control system core.

The configuration system can comprise multiple network elements of different types, each cell containing an element manager for each type of network element, the method comprising providing that part of the local configuration tree relating to a type of network element to an element manager relating to that respective type of network element.

The local configuration tree can contain conditional control statements, the method comprising checking within the control system for an existing condition and selecting the appropriate configuration statement to deploy. A different configuration statement can be selected upon change of the existing condition.

Another aspect of the invention comprises a system for delivering network services to subscribers, the network including a configuration system comprising:
- a core;
- at least one cell connected to the core; and
- at least one network element connected to the cell, each network element supporting a number of subscribers for provision of the services; wherein the configuration system core comprises a database and a series of application modules for managing interaction of the configuration system core with external applications, cells and network elements, one of the modules comprising a configuration module containing a configuration tree that that describes all services available to the subscribers; and the location of each individual subscriber in the network and the particular services to which it subscribes, the configuration module being capable of deploying to each cell a part of the configuration tree covering that part of the network comprising that cell and any associated network elements.

The configuration module preferably contains network topology information including the configuration of network elements.

In one embodiment the configuration module is capable of parsing changes to the configuration tree made by external applications.

Each cell typically comprises a configuration rendering module and an element manager, the configuration rendering module including the part of the configuration tree covering the cell in which it resides and being arranged to pass to the element manager configuration information for the associated network elements, the element manager being arranged to deploy the final configuration into the network elements.

Preferably an element manager is provided for each type of network element.

A system can further comprise one or more of: an inter-application message bus connecting the various application modules; a database application interface module for providing database storage and access between other modules in the configuration system core and the database; an external application interface module for providing system data to external applications; a script engine for automated execution of scripts in the core; and at least one log module for logging system activity.

### Brief description of the drawings

The invention will now be described in relation to the accompanying drawings, in which:
Figure 1 shows a schematic diagram of a broadband network to which the present invention relates;
Figure 2 shows a schematic functional network control system;
Figure 3 shows a system for implementing a method according to the invention; and
Figure 4 shows a configuration tree formed according to a method according to the invention.

### Mode(s) for carrying out the invention

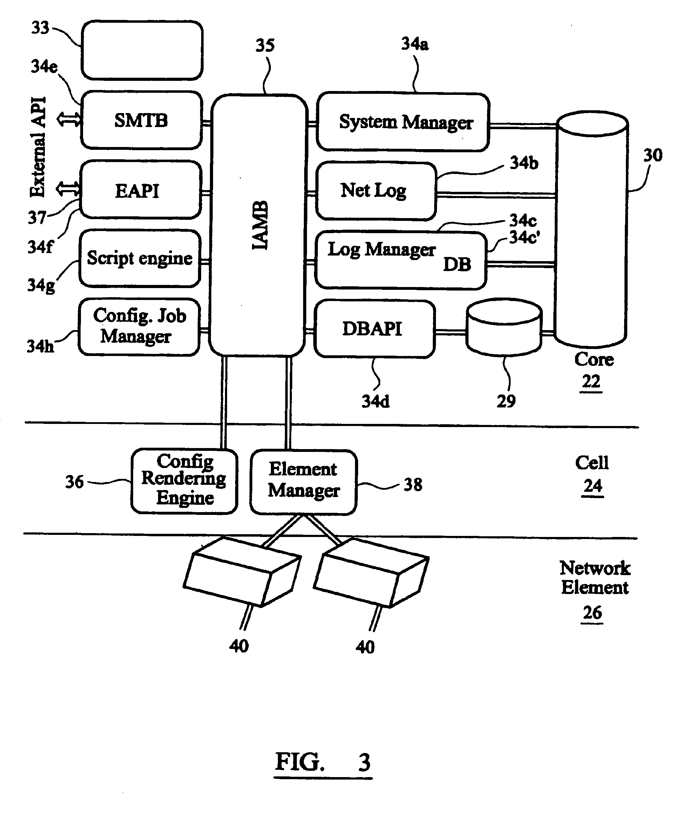

Figure 3 shows a system suitable for implementing the invention. The core 22 comprises a file system 30, a database 32, a core module element manager 33, and a set of modules 34a-h that provide the core services for the network. The file system 30, database 32 and modules 33, 34 are all located on a central server, although it is possible that the various components could be distributed over more than one server. The core modules 34 interact with each other, the cells 24 and network elements 26. The core 22 also interacts with external applications such as service provider systems via an external API 37. The core modules 34 comprise a system manager module 34a, a net log module 34b, a log manager module 34c, a database application interface 34d, a subscriber management tool bridge 34e, an external application interface 34f, a script engine 34g, and a configuration job manager 34h. The various core modules 34 communicate with each other via an inter-application message bus 35. Each cell 24 comprises modules that handle that part of the network topology in that cell. The cell 24 can be located on the same server as the core 22, but in the case of a large network, the cell 24 may be separated from the core server and deployed in the network. Each cell includes a configuration rendering engine module 36 and an element manager module 38. Each network element 26 typically comprises a programmable router 40.

The modular approach to the core 22 allows effective operation of the various functions of the core. A detailed description of the modules 34a-h follows.

The system manager module 34a maintains a central file repository in which various types of files are stored. The system manager 34a distributes the files to other parts of the system as required and serves as the aggregation point for files from other parts of the system.

When the system manager 34a starts, it makes an inventory of files present in the file repository path. The system manager then connects to the inter-application message bus (IAMB) 35 and starts to listen for requests. Other modules, such as the element manager module 38 in the cell 24, may then connect to the system manager 34a and report interest (subscribe) in files of certain types. The system manager 34a likewise subscribes to files from the connecting module.

An internal file transfer subsystem (present as a layer on top of IAMB 35) handles transfer of files matching subscription to the subscribing module. File transfer is automated by an internal file transfer subsystem. Files that are added to the file repository path are automatically detected by the subsystem which notifies the module that a new file is available. The module can then request a file transfer using the subsystem. The subsystem is used by all modules that perform file transfers with the system manager 34a.

Operating system images are required by the element manager module 38 based on the content of configuration line objects (discussed in more detail below in relation to the configuration tree) that specify which operating system image to run on any network element 26. If a required operating system image for a given network element is not available locally or in the system manager file repository 34a, the network element will be blocked as a safety measure since it is not possible to ensure that the correct configuration is deployed into the network element 26. Operating system image packages are uploaded to the system manager 34a from a GUI.

System logging functions are provided in two modules: the net log module 34b and the log manager module 34c. While these are separate in this embodiment, they could be combined in a single module in certain cases. The net log module 34b holds the address history log and other important information related to IP address assignment to subscribers in the network.

The database files generated by net log 34b are set up to be rotated based on size and age. Whenever the maximum file size or the maximum age has been reached the log file is rotated. The log rotation for net log 34b works the same way as for the log manager module 34c (see below).

The log manager module 34c holds the system log. This information relates to the operation of the system and contains information about events important in the operation of the system, including network element related actions. The log manager module 34c is also the recipient for network action request (NAR) messages and triggers automated scripts in the script engine module 34g designed to handle such events. The log manager module 34c also stores system logs in a simple database 34c and is also responsible for a network action request event handling including calling the script engine module 34g to execute scripts that handle specific events.

System modules can generate log messages related to events and states that occur in the system. Log messages are sent over the IAMB 35. The log manager listens to the logging channels and stores received log messages into the database 34c'.

If the log manager module 34c becomes congested with logging information, it will automatically start to prioritise log messages. Lower priority log messages are dropped if the queue grows above a certain threshold. When the pressure reduces the log manager 34c resumes storage of lower priority messages.

The database files generated by log manager 34c are set up to be rotated based on size and age. Whenever the maximum file size or the maximum age has been reached the log file is rotated.

Network action requests (NARs) are a special event triggered by a system module. A NAR event indicates an exceptional state that requires external interaction to resolve. Examples of NAR events include IP address pool exhaustion and connection from an unknown network element. If the system is unable to resolve the situation on its own, assistance is required, either by an operator via the GUI, or by an automated script executed on the script engine module 34g. The log manager 34c listens to the NAR channel which means that it receives all NAR events. The event is then matched against the list of known scripts and if any matching script is found the event is sent to the script engine 34g with instructions to execute the script. When the script engine 34g reports that it has successfully handled the script the NAR event is deleted from the NAR event database.

The database application interface (DB-API) module 34d provides database storage and access facilities for the other core modules. ODBC is used to communicate with the external database 32 that holds the configuration tree and other important data for operation of the system.

The DB-API 34d provides an abstraction layer between the system modules and the external database 32. The purpose is to make the selection of external database irrelevant for database operations by the other modules. A module that requires database access makes a connection through the DB-API 34d. Calls to common functions for inserting, updating and selecting from the database tables are translated from an internal system API to the ODBC call to the database.

The subscriber management tool bridge module 34e is tied to the external API 37 to allow interaction with an external subscriber management tool application (not shown). Other such bridge modules can be provided according to requirements, or may be completely absent.

The external application interface module 34f provides external applications, such as GUI, self-registration portals and the subscriber management tool with access to system data. The EAPI module 34f provides the application interface for external applications when communicating with the system. An example of an external application that uses the EAPI 34f is the GUI.

Other system modules with export functions to the EAPI 34f can be called by external applications. The EAPI 34f resolves the functions to be called and any parameters, verifies that all required parameters are provided and of the appropriate type and then creates a function call to the function. Functions can be internal to the EAPI 34f or they can be located in one of the system modules. If the function is located in one of the system modules, the function is called over the IAMB 35.

The primary front-end of EAPI 34f is the SOAP/XML front-end.

The EAPI 34f contains a user authentication mechanism in which users that connect through external applications must be authentication before access is given to data and functions. Once authenticated a session is established in which the user can access all data and functions relevant to the namespace the user belongs to.

The script engine module 34g provides automated script execution. During normal operation, situations may occur in which the system requires external logic to resolve the situation. An example of this is when an unknown network element attempts to contact the system. Such an element might be part of normal deployment and an automated script can create the necessary objects in the database when the element connects. The script engine module 34g can also provide a framework for wizards to assist in the management of the network through the GUI.

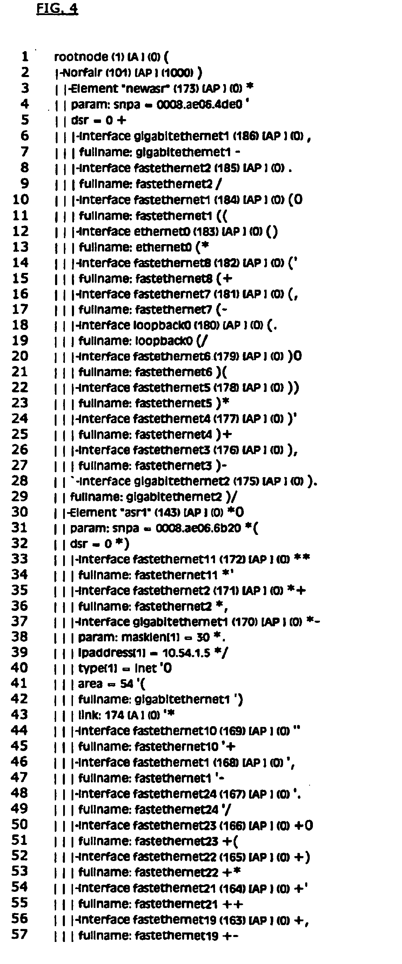

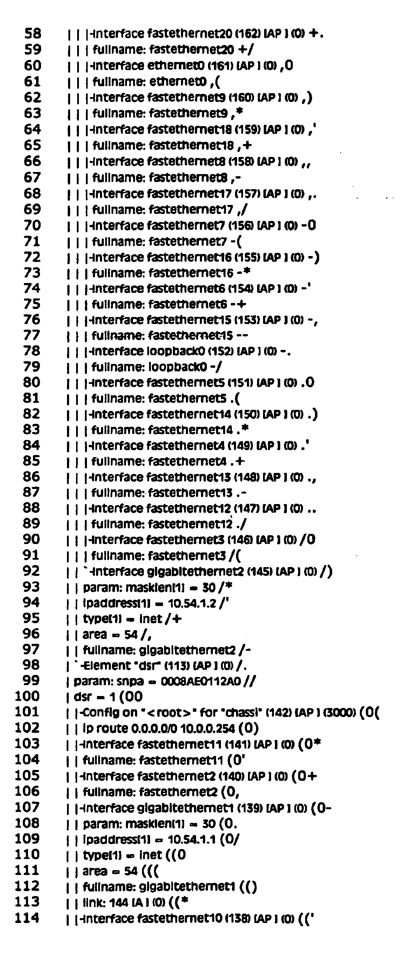

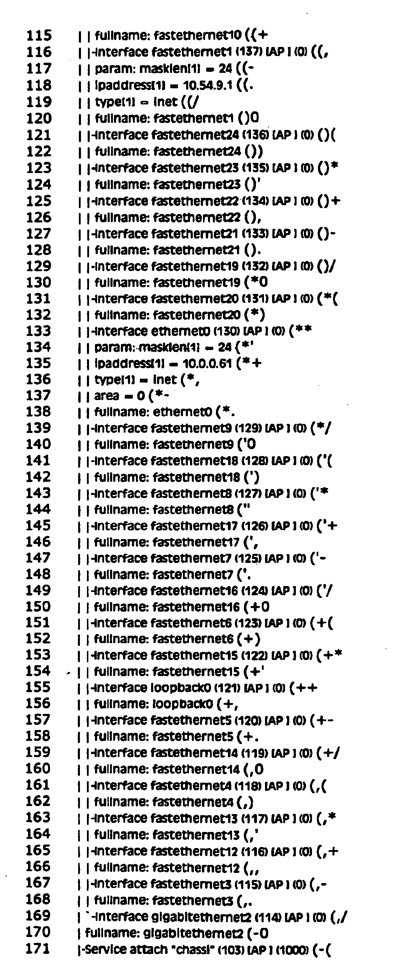

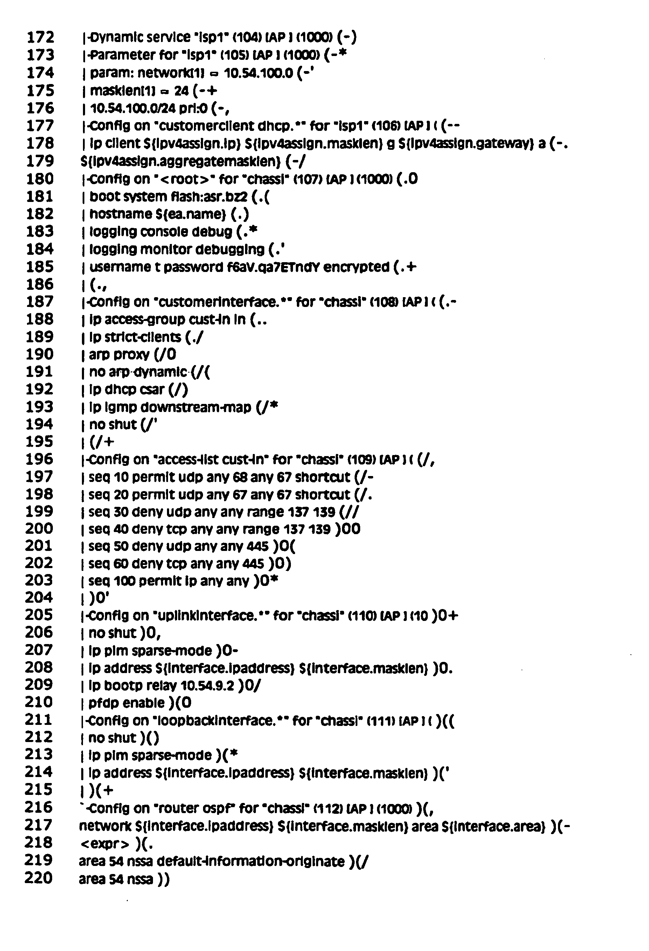

The configuration job manager (CJM) module 34h holds the configuration tree that describes the services available to subscribers, where in the network subscribers are present and to which services they subscribe. An example of a configuration tree expressed as a text file is shown in Figure 4. The configuration tree also contains network topology information including the configuration of network elements 26. The CJM 34h maintains the configuration tree and any changes to the tree from external applications are parsed before being deployed into the cell 24.

The CJM 34h is responsible for all object create, delete and update operations and contains the resource manager subsystem that handles IP address management within the system.

The CJM 34h connects to the DB-API module 34d at start-up. It then attempts to read the complete configuration tree into memory. Once completed, the CJM 34h waits for connections from other modules in the system. As a user views, creates, deletes or modifies objects in the configuration tree via the GUI, calls comes into the EAPI module 34f that are forwarded to the CJM 34h for object manipulation. In addition to the EAPI 34f, the configuration rendering engine (CRE) 36 in the cell 24 also communicates with the CJM 34h.

When the CRE 36 connects to the CJM 34h a session is established between the modules. The CRE 36 has a local copy of the configuration tree that is relevant to its position in the network. When the two modules connect they compare the version of the CRE's local copy of the configuration tree with the version currently in the CJM's memory. If they are different, the CRE 36 flushes its copy and receives a new copy from the CJM 34h. This ensures that the CRE 36 has the exact same copy of the configuration tree as the CJM 34h.

As changes to the configuration tree are received and handled by the CJM 34h it determines which of the CREs 36, if any, need to be updated. Updates are then sent to the relevant CRE 36.

The CJM 34h requires that changes to the configuration tree must be correct and possible to deploy in order to be allowed. This is controlled through the verify-commit procedure. Changes to the configuration tree, which includes create, delete and modify operation on objects, must be verified by the system modules before they can be permanently committed to the configuration tree. When the verify operation is called, the CJM 34h makes adjustments to the configuration tree as if the changes to the objects were included. This triggers configuration rendering and configuration verification in the cell modules, but the configuration is not actually deployed into the network. Once the verify has concluded, any errors present are reported back and an effective rollback to the preceding configuration tree occurs. If no errors are detected, the job is ready for commit. Otherwise the errors must be corrected and a new verify operation must take place.

When a commit is made the changes are permanently committed to the configuration tree (unless the job is to occur in the future, see below) and the changes take effect immediately. The configuration is rendered and deployed into the network as required.

A resource manager subsystem of the CJM 34h is responsible for managing resources in the system. A typical resource is IPv4 address space used for interface addresses as well as for assignment to subscribers in the network. The system has a specific object, the Resource IPv4 object, for IP address management. The object represents a piece of the IPv4 address space and is referred to as an address pool. The name of the object is used to connect multiple objects together so that one object - the object closest to the root of the tree - represents 100% of the address pool. Other objects further down in the configuration tree branches that have the same name represent smaller parts of the main pool - up to 100% of the address pool of its immediate ancestor.

When the resource IPv4 object is created and committed to the configuration tree, the addresses of the pool it represents are allocated from its ancestor. There is an invisible ancestor representing the entire IPv4 address pool at the root node, so in fact an allocation is always made even when creating the resource object directly under the root node.

If the object does not have an ancestor (another resource IPv4 object closer to the root of the tree) the subnet and prefix length to allocate from the "global" IPv4 space must be specified. If there is an ancestor object the subnet is optional to specify when the object is created. If specified, the system will attempt to allocate the specified subnet from the ancestor resource objects pool. If the subnet is already allocated, the verify stage will fail for the new resource object. If there is an ancestor resource object, it is sufficient to specify the prefix length required for the new resource object. The system will then allocate a subnet of that size from the ancestor pool when the new object is committed to the configuration tree.

This mechanism allows a specific subnet from a pool to be specified if required, but also allows only the size of the subnet required to be specified when the actual subnet used is not important (it is up to the system to allocate the next available subnet of the requested size).

A link is a connection between two or more network elements. For an IP network, the link needs a subnet and each interface of each network element connecting to the link must also have an address. The address pool system allows links to be dynamically allocated but also makes it possible to specify the exact addresses used on each interface if required.

The following example describes how link addresses can be configured and used by the address pools.

A Resource IPv4 object is created at the root of the tree for the subnet 10.0.0.0/16. The name of the object is set to "links". Because there is no ancestor and the subnet is specified the address pool "links" is created with 10.0.0.0/16 subnet (actually allocated from the invisible 0/0 address pool that represents the entire IPv4 address space).

It is important to allow aggregation of prefixes at area boundaries to reduce the amount of routing information carried between routing areas and the backbone. For this reason a Resource IPv4 object named "Links" for a /24 subnet is created at the area boundary level in the topology. When the object is committed a /24 from the /16 is allocated.

Network elements are then added to the topology and links between them are created. In a ring topology, the link needs only a small /30 subnet to accommodate each interface on each network element. A Resource IPv4 object named "links" for a /30 subnet is created as a child of each link. Each such object will receive a /30 from the previously created /24 address pool. Finally, to allocate the IP address for each interface, a child Resource IPv4 object is created on each interface on each link. Since each interface requires a single address, the prefix length is always /32 - for the interface a single IP address is allocated from the links /30. If the interface requires a specific IP address (for example it has already been configured) it is possible to specify the wanted address from the links pool and if that has not been allocated yet it will be so once the interface's child resource object is committed to the configuration tree.

To assign an IP address to a client, the service name of the service used by the client is used to locate a Parameter IPv4 object for that service. The most suitable ParameterIPv4 (determined by its location in the tree and its weight) is used. The ParameterIPv4 object must have a child Resource IPv4 object. The client will receive an address from that address pool. If no addresses are available a NAR event will be generated to allow an automated script or network administrator to add another child resource to the Parameter IPv4 object.

In the cell 24, the CRE 36 has a local copy of the configuration tree covering that part of the network covered by that cell 24. The CRE 36 assembles objects from the configuration tree to form the final configuration to be deployed into the respective network elements 40. This process includes concatenating configuration line objects and parameters, allocating IP addresses and resolving any configuration pre-processor conditions to form the final network element configuration that is passed to the element manager module 38.

The CRE 36 is a part of the cell 24. Its primary purpose is to generate the completed configuration for each type of network element 40 under its control. The configuration is then passed on to the element manager 38 for verification and deployment. The CRE 36 is responsible for address allocation and maintains a list of all known clients.

The CRE 36 communicates with the CJM 34h in the core. The CJM 34H maintains the complete configuration tree for the entire network. Each CRE 36 receives a local copy of the configuration tree that describes the part of the network covered by the cell 24 (the CRE 36 does not have a complete copy of the configuration tree unless it is the only cell 24 operating). When the CRE 36 starts, it establishes a job session with the CJM 34H and receives a job id. The CJM 34H continuously verifies the job id database version used with each connected CRE 36. If the job id changes (an indication that the session has restarted, for instance due to a network problem), the CJM 34h will instruct the CRE 36 to purge its configuration tree and resend the configuration tree to the CRE 36. This allows the CRE 36 to always have the latest and accurate copy of the configuration tree.

During normal operation the CJM 34h will send updates to the configuration tree with changes to network topology, configuration updates and so on. The CRE 36 parses the changes it receives and initiates internal jobs to render the configuration.

Some jobs can be timer controlled - set to occur at a precise moment or at regular intervals. For this reason the CRE 36 operates an internal timer that can initiate internal jobs to render configuration updates.

In addition to CJM 34h initiated internal jobs, such jobs can also be started as a result of activities in the network. A typical example is when a client in the network requests and address with DHCP. An appropriate message triggers the element manager 38 to open a client context to the CRE 36 and that in turn means that the CRE 36 must render the appropriate configuration for the client, allocated IP addresses, generate network log and possible dynamic DNS updates for the client and of course send the rendered configuration to the element manger 38 for deployment.

An important function in the CRE 36 is the address assignment. Whenever a service that requires IP addresses to be assigned to clients, links or network elements are passed through the CRE, it will allocate the addresses used from address pools as defined by resource inet objects in the configuration tree. The CRE 36 allocates a minimum block, for example a /30 block of addresses to each network element. As client contexts are opened individual addresses from the block are allocated and inserted into the rendered configuration.

Through the EAPI 34f the CRE 36 offers functions to issue and revoke tickets. A ticket is simply a named value attached to the variable . Since the ticket is bound to the client for which it is created, it can be used with condition statements in the CLOB (see below) when rendering service configuration. For example, assume a ticket named weblogin that is either set or not set for the client by an external portal application. When the client connects to the network obviously there is no ticket available. In the relevant CLOB a condition can be used to render an access list that prevents access to anything but the portal for that client. When the client has accessed the portal and logged into the network, the portal application creates the $client.ticket.weblogin ticket for the client (based on its IP address). The creation call through the EAPI 34f to the CRE 36 creates a job update that makes the CRE 36 re-render the configuration for the client. Since the previous condition now is false, the access-list is no longer generated for the client and the client is then able to access the entire network.

The element manager module 38 is specific to each type of network element. Typically this will include an operating system that runs on the specific hardware in question. The module 38 receives configuration from the CRE 36 and verifies that all configuration statements are accurate and valid for the operating system on which it is to run. Network elements 40 connect to the element manager 38 via an appropriate protocol to receive the configuration.

The system allows multiple element managers 38 for different types of network elements 40, an EM being associated with each type of operating system used by the network elements 40. The element manager 38 maintains communication with network elements using an appropriate protocol. The element manager 38 is part of the cell 24. It receives the configuration to deploy into the network from the CRE 36.

The system manager 34a in the core has the central file repository including all operating system images. As users upload operating system images from the GUI, the system manager 34a splits them into the actual image file and verification library file and stores them in the repository. The system manager 34a then notifies all element managers 38 about the new image which the element manager 38 then may request if it has elements 40 specified to use that image. An image requested from the system manger 34a is stored in the element manager local file repository on the cell server. Only those images present in the local file repository can be provided to network elements 40. This also means that for any operating system image upgrade to occur the image must first be uploaded to the system before network elements 40 can download the image.

The following terminology is used when describing the configuration tree.

**Table 1**

| Term | Description |
|---|---|
| Level in tree | The configuration tree consists of a root and a number of branches. Branches are created with the node object. Objects in the root are on the first level, objects in any node located on the first level are on the second level. Objects in nodes on the second level are on the third level and so on. Higher level typically refers to a level closer to the root of the tree while lower level refers to a level below or further away from the root of the tree. |
| Object class | Objects in the configuration tree represent different types of information that the system requires to manage the network. Each object belongs to a class that defines the role the object services and the information the object contains. |
| Reference name | The system allows generic configuration templates to contain variables and other information expressed with reference names to fields and parameters of objects in the configuration tree. During configuration rendering the reference names are replaced with the true value of the fields of relevant objects. This can typically be used in a configuration line object to define the hostname of the element that receives the configuration. Thereby the same template can be used for all elements, but still generate a per element unique configuration during rendering when the reference name is replaced with the content of that field for each element. |
| Namespace | The namespace is a logical grouping of objects that has a common owner. The namespace typically relates to the service provider so that all configuration line objects, service objects, service attach objects and so on have the same namespace. When logged into the GUI from a connection the display of information may be limited to only objects related to a certain namespace. |

The following table describes briefly the classes of objects found in the configuration tree. The abbreviations are used in the example shown in Figure 4 of a configuration tree.

**Table 2**

| Object Class | Abbreviation | Description |
|---|---|---|
| Node | Node | An object that can hold other objects, similar to a file system directory or grouping. Node objects typically represent a logical or physical grouping of other objects, such as a geographic area. The node object may create a new level in the configuration tree. |
| Library | library | An object that can hold other objects. The library is similar to the Node but does not create a new level in the tree. The library is intended for visible grouping of configuration and configuration related objects such as CLOBs and parameters to make the configuration tree view less clogged with objects. |
| Configuration Line Object | clob | The CLOB is a textual representation of configuration data such as operating system configuration statements. The ASCII text can contain parameters and pre-processor statements that are resolved into real values during configuration rendering. |
| Parameter | param | The parameter object defines a value for a named parameter. |
| Parameter IPv4 Address Pool | Param-ipv4 | The parameter object for IPv4 address pool defines an IP address subnet to be used for address assignments. |
| Element Attach | Ea | An object that represents a network element or device such as a router, DSLAM or Ethernet switch. |
| Cell Attach | Ca | The logical connection point for a cell. All objects on the same level or a lower level (branch) from the location of the cell attach is handled by that cell. |
| Link | Link | The logical or physical connection between interfaces of different network elements. The link typically represents a layer3 broadcast domain (configurable with IP subnet). |
| Resource IPv4 address | Rc-inet | The resource object for IPv4 address pool defines an address pool of IP addresses for use in the network. |
| Resource Scalar | Rc-sclr | The resource object for scalar values defines a pool of scalar values available in the network. |
| Interface | iface | A logical or physical interface on a network element. The interface connects the network element to a link. |
| Service Attach | Svc-attach | The deployment of a specific service in the network. If located on the same level as one or multiple network elements all of those network elements (and any elements on lower levels from that location) receives the service. If located beneath an interface object, that interface receives the service. |
| Service Static | Svc-static | A static service represents a service that is automatically deployed as soon as the related network element makes contact with the system. |
| Service Dynamic | Svc-dynamic | A dynamic service represents a service that is deployed based on a signal from the network element (for example when a DHCP request is seen by a client device). |

Each object in the configuration tree has a number of fields. Some fields describe the object and its position in the configuration tree while others affect how the object is used during configuration rendering. A summary of the object listed above follows.

The element attach object represents a network element or device. It is typically a physical device with a number of interfaces. In one example of a network one element attach object is created for each router in the network. Element attach objects can also be created to represent other types of devices in the network. This allows the configuration tree to contain an accurate picture of the network topology that includes core and distribution routers, layer2 switches, DSLAMs or other equipment.

A node object can hold other objects, similar to a file system directory or grouping. Node objects typically represent a logical or physical grouping of other objects, such as a geographic area. The node object creates a new branch in the tree. The node object may create a new level in the configuration tree. The root level is level 1. A node in the root level creates a second level. Any object within that node belongs to the second level. A node in the second level creates a third level and so on. Each node does not create a new level, objects in nodes on the same level belongs to the same level but to different branches of the configuration tree.

The library object is an object that can hold other objects. The library is similar to the node object but does not create a new level in the tree. Library objects cannot be nested. The library is intended for visible grouping of configuration and configuration related objects such as CLOBs and parameters to make the configuration tree view less clogged with objects. Library objects are intended to hold configuration, parameter and service objects. Several such objects will exist, typically on the root level of the tree. By grouping them into library objects, the GUI users view of the configuration tree is enhanced.

The configuration line object holds configuration statements related to a service. Any configuration deployed to a network element is regarded as a service, including the static default configuration sent to the device to make it operational regardless of it any clients are attached to the network element. Configuration line objects hold rows of configuration statements. The configuration may be embedded with reference names to fields in other objects as well as to parameters. During configuration rendering these reference names are replaced with their true values before the configuration is sent to the network device.

The configuration pre-processor language is a macro language that allows conditions and expressions to determine which part of the configuration rows in the object that are used during rendering.

The parameter object contains only parameters. Parameters defined by the parameter object can be referenced directly. Several object classes also have a parameter field. Parameters defined in those parameter fields work exactly as parameters defined in a parameter object - they can be referenced the same way.

The parameter object for IPv4 address contains only parameters. The IPv4 parameter object has a special purpose and a set of predefined entries in the parameter field. It is possible to add other entries to the parameter field and if so they will work as entries in a normal parameter object. The IPv4 parameter object is used during configuration rendering to allocate IP addresses from an IPv4 address pool.

The cell attach object is the logical connection point for a cell. All objects on the same level or a lower level (branch) from the location of the cell attach is handled by that cell.

The configuration job manger holds the configuration tree. It sends a subsection of the tree to each cell based on the cell attach so that each cell only receives and knows about its part of the tree.

The link object represents a logical or physical link or connection between interface objects. The link object typically represents a layer3 broadcast domain which in its simplest form may be a point-to-point connection between to network elements. The link object holds parameters relevant for the link such as the IP subnet used.

IP addresses are a key resource in any IP network. IP address pools are defined with the resource IPv4 address object. An IP address pool is a subnet of IP addresses that can be used for services and links in the configuration tree. Addresses can be allocated dynamically or assigned statically. Dynamic addresses are allocated when requested while static addresses are always assigned.

The resource scalar object can be used to represent any limited scalar value where limited means that only a certain amount or maximum number of the resource is available. Examples for scalar resources are OSPF areas or vlans where a maximum number of the resource can exist in the network.

The interface object is a logical or physical interface on a network element. The interface has two primary purposes. The first is to connect one network element to another, in which case the interface object connects to a common link object. The second use is when the interface objects represents the connection point for a subscriber. In this scenario the interface object is a parent object for a service attach object related to a service that the subscriber has.

A static service represents a service that is automatically deployed as soon as the related network element makes contact with the system. Whenever the system encounters a service attach for a static service the configuration for that service is rendered and deployed to the network element.

A dynamic service represents a service that is deployed based on a signal from the network element (for example when a DHCP request is seen by a client device).

Whenever the system encounters a service attach for a dynamic service it will wait for a trigger event to occur before configuration is rendered for the service.

A trigger event is signalled by the element manager for the network element. The trigger event typically originates with the DHCP DISCOVER message sent by a client. How that original event is translated into a trigger event for a dynamic service depends on the network element and element manager. In one embodiment, the network element signals the operating system element manager and the element manager then generates the trigger event internally.

The service dynamic object is typically placed close to or at the root level of the tree to define which services in the network that are dynamic. This also makes it easier to change the behaviour of a service in a network without manipulating individual service attach objects.

The service attach object defines the deployment of a specific service in the network. If located on the same level as one or multiple network elements all of those network elements (and any elements on lower levels from that location) receives the service. If located beneath an interface object, that interface receives the service.

Any configuration deployed in the network, including basic system configuration, is regarded as a service. For this reason, service attach objects must be created in the configuration tree also for basic system configuration for network elements even if that configuration is not related to a subscriber.

## Claims

1. A method of configuring a broadband network for providing telephone, internet and TV/video services to subscribers, the network including a configuration system comprising:
- a core (22) comprising a file system (30), a database (32), a core module element manager (33) and a set of modules (34a-h) that provide core services for the network;
- at least one cell (24) comprising a configuration rendering engine module (36) and an element manager module (38) connected to the core (22); and
- at least one network element (26) connected to the cell (24), each network element (26) comprising at least one physical element supporting a number of subscribers for provision of the services;
the method comprising:
- creating, in the configuration system core (22), an overall configuration tree including topological information that describes all services available to the subscribers; and the location of each individual subscriber in the network and the particular services to which it subscribes;
- providing each cell (24) with a local configuration tree including topological information comprising that part of the overall configuration tree that describes all services available to the subscribers connected to network elements (26) in that cell (24), and the location of each individual subscriber in that cell (24) and the particular services to which it subscribes; and
- configuring each network element (26) according to the local configuration tree in its respective cell (24).

2. A method as claimed in claim 1, wherein the configuration trees comprise a series of objects located at different levels, each object comprising a function and parameters required to fulfil that function.

3. A method as claimed in claim 2, wherein the objects comprise IP address pools, the method comprising assigning an IP address pool to an object that is a subnet of its immediate ancestor such that the IP address pool assignment corresponds to the network topology.

4. A method as claimed in any preceding claim, comprising rendering the local configuration tree into configuration commands and data in the cell (24), and deploying the configuration commands and data from the cell (24) into the network elements (26) and subscribers.

5. A method as claimed in claim 4, wherein any changes to the local configuration tree are verified in the cell (24) and are only deployed into the network elements (26) and subscribers once verified as correct.

6. A method as claimed in claim 4 or 5, comprising providing the local configuration tree to the cell (24) in a generic format, and deploying the configuration commands in a device specific format.

7. A method as claimed in any preceding claim, comprising changing the overall configuration tree in response to communications received by the core (22) from a cell (24); providing a local configuration tree to the cell (24) including the change, and deploying the changed configuration into the network elements (26).

8. A method as claimed in claim 7, further comprising communicating information from the network element (26) to the cell (24).

9. A method as claimed in any preceding claim, wherein the services are provided by an external service provider, the method further comprising the external service provider changing the overall configuration tree in the configuration system core (22) by means of an external link to the configuration system core (22).

10. A method as claimed in any preceding claim, wherein the configuration system comprises multiple network elements (26) of different types and each cell (24) contains an element manager (38) for each type of network element (26), the method comprising providing that part of the local configuration tree relating to a type of network element (26) to an element manager (38) relating to that respective type of network element (26).

11. A method as claimed in any preceding claim, wherein the local configuration tree contains conditional configuration statements, the method comprising checking within the configuration system for an existing condition and selecting the appropriate configuration statement to deploy.

12. A method as claimed in claim 11, comprising selecting a different configuration statement upon change of the existing condition.

13. A system for delivering broadband network telephone, internet and TV/video services to subscribers, the network including a configuration system comprising:
- a core (22) comprising a file system (30), a database (32), a core module element manager (33) and a set of modules (34a-h) that provide core services for the network;
- at least one cell (24) comprising a configuration rendering engine module (36) connected to the core (22); and
- at least one network element (26) connected to the cell (24), each network element (26) comprising at least one physical element and supporting a number of subscribers for provision of the services;
wherein the configuration system core (22) comprises a database (32) and a series of application modules (34a-h) for managing interaction of the configuration system core (22) with external applications, cells (24) and network elements (26), one of the modules comprising a configuration module containing a configuration-tree including network topology information including the configuration of network elements (26) that that describes all services available to the subscribers; and the location of each individual subscriber in the network and the particular services to which it subscribes, the configuration module being capable of deploying to each cell (24) a part of the configuration tree including network topology information including the configuration of network elements (26) covering that part of the network comprising that cell (24) and any associated network elements (26).

14. A system as claimed in claim 13, wherein the configuration module is capable of parsing changes to the configuration tree made by external applications.

15. A system as claimed in claim 13 or 14, wherein each cell (24) comprises a configuration rendering engine module (36) and an element manager module (38), the configuration rendering engine module (36) including the part of the configuration tree covering the cell (24) in which it resides and being arranged to pass to the element manager module (38) configuration information for the associated network elements (26), the element manager module (38) being arranged to deploy the final configuration into the network elements (26).

16. A system as claimed in claim 15, wherein an element manager module (38) is provided for each type of network element (26).

17. A system as claimed in any of claims 13-16, further comprising an inter-application message bus (35) connecting the various application modules.

18. A system as claimed in any of claims 13-17, wherein the configuration system core (22) also comprises a database application interface module (34d) for providing database storage and access between other modules in the configuration system core (22) and the database (32).

19. A system as claimed in any of claims 13-18, wherein the configuration system core (22) also comprises an external application interface module (37) for providing system data to external applications.

20. A system as claimed in any of claims 13-19, further comprising a script engine (34g) for automated execution of scripts in the core (22).

21. A system as claimed in any of claims 13-20, further including at least one log module (34b,c) for logging system activity.

## Patentansprüche

1. Verfahren zum Konfigurieren eines Breitbandnetzwerks zum Bereitstellen von Telefon-, Internet- und TV-/Videodiensten für Teilnehmer, wobei das Netzwerk ein Konfigurationssystem enthält, umfassend:
- einen Kern (22), der ein Dateisystem (30), eine Datenbank (32), einen Kernmodulelementmanager (33) und eine Menge von Modulen (34a-h) umfasst, die Kerndienste für das Netzwerk bereitstellen;
- mindestens eine Zelle (24), die ein Konfigurations-Rendering-Engine-Modul (36) und ein Elementmanagermodul (38), das mit dem Kern (22) verbunden ist, umfasst; und
- mindestens ein mit der Zelle (24) verbundenes Netzwerkelement (26), wobei jedes Netzwerkelement (26) mindestens ein eine Anzahl von Teilnehmern zur Bereistellung der Dienste unterstützendes physikalisches Element umfasst;
wobei das Verfahren die folgenden Schritte umfasst:
- Erzeugen eines Gesamtkonfigurationsbaums in dem Konfigurationssystemkern (22), der topologische Informationen enthält, die alle den Teilnehmern verfügbaren Dienste; und den Ort jedes individuellen Teilnehmers in dem Netzwerk und die bestimmten Dienste, die er subskribiert, beschreiben;
- Ausstatten jeder Zelle (24) mit einem lokalen Konfigurationsbaum, der topologische Informationen enthält, die den Teil des Gesamtkonfigurationsbaums umfassen, der alle Dienste, die den mit Netzwerkelementen (26) in dieser Zelle (24) verbundenen Teilnehmern verfügbar sind, und den Ort jedes individuellen Teilnehmers in dieser Zelle (24) und die bestimmten Dienste, die er subskribiert, beschreibt; und
- Konfigurieren jedes Netzwerkelements (26) gemäß dem lokalen Konfigurationsbaum in seiner jeweiligen Zelle (24).

2. Verfahren nach Anspruch 1, wobei die Konfigurationsbäume eine Reihe von sich auf verschiedenen Ebenen befindenden Objekten umfassen, wobei jedes Objekt eine Funktion und Parameter umfasst, die zum Erfüllen dieser Funktion erforderlich sind.

3. Verfahren nach Anspruch 2, wobei die Objekte IP-Adressenpools umfassen, wobei das Verfahren umfasst, einem Objekt, das ein Subnetz seines unmittelbaren Vorfahrens ist, einen IP-Adressenpool zuzuweisen, dergestalt, dass die IP-Adressenpoolzuweisung der Netzwerktopologie entspricht.

4. Verfahren nach einem der vorhergehenden Ansprüche, umfassend das Rendering des lokalen Konfigurationsbaums zu Konfigurationsbefehlen und -daten in der Zelle (24) und Anwenden der Konfigurationsbefehle und -daten aus der Zelle (24) in den Netzwerkelementen (26) und Teilnehmern.

5. Verfahren nach Anspruch 4, wobei jegliche Änderungen an dem lokalen Konfigurationsbaum in der Zelle (24) verifiziert werden und nur nach Verifikation als korrekt in den Netzwerkelementen (26) und Teilnehmern angewendet werden.

6. Verfahren nach Anspruch 4 oder 5, bei dem der lokale Konfigurationsbaum der Zelle (24) in einem generischen Format bereitgestellt wird und die Konfigurationsbefehle in einem einrichtungsspezifischen Format eingesetzt werden.

7. Verfahren nach einem der vorhergehenden Ansprüche, bei dem der Gesamtkonfigurationsbaum als Reaktion auf Übermittlungen, die der Kern (22) von einer Zelle (24) empfängt, geändert wird; der Zelle (24) ein lokaler Konfigurationsbaum bereitgestellt wird, der die Änderung enthält, und die geänderte Konfiguration in den Netzwerkelementen (26) angewendet wird.

8. Verfahren nach Anspruch 7, bei dem ferner Informationen von dem Netzwerkelement (26) zu der Zelle (24) übermittelt werden.

9. Verfahren nach einem der vorhergehenden Ansprüche, wobei die Dienste von einem externen Dienstanbieter bereitgestellt werden, wobei das Verfahren ferner umfasst, dass der externe Dienstanbieter den Gesamtkonfigurationsbaum in dem Konfigurationssystemkern (22) mittels einer externen Verbindung mit dem Steuersystemkern (22) ändert.

10. Verfahren nach einem der vorhergehenden Ansprüche, wobei das Konfigurationssystem mehrere Netzwerkelemente (26) verschiedener Arten umfasst und jede Zelle (24) für jede Art von Netzwerkelement (26) einen Elementmanager (38) enthält, wobei das Verfahren umfasst, den Teil des lokalen Konfigurationsbaums, der eine Art von Netzwerkelement (26) betrifft, einem Elementmanager (38) bereitzustellen, der diese jeweilige Art von Netzwerkelement (26) betrifft.

11. Verfahren nach einem der vorhergehenden Ansprüche, wobei der lokale Konfigurationsbaum konditionale Konfigurationsanweisungen enthält, wobei das Verfahren umfasst, innerhalb des Konfigurationssystems auf einen existierenden Zustand zu prüfen und die geeignete anzuwendende Konfigurationsanweisung auszuwählen.

12. Verfahren nach Anspruch 11, bei dem bei einer Änderung des existierenden Zustands eine andere Konfigurationsanweisung ausgewählt wird.

13. System zum Abliefern von Breitbandnetzwerkdiensten für Telefon, Internet und TV/Video an Teilnehmer, wobei das Netzwerk ein Konfigurationssystem enthält, umfassend:
- einen Kern (22), der ein Dateisystem (30), eine Datenbank (32), einen Kernmodulelementmanager (33) und eine Menge von Modulen (34a-h) umfasst, die Kerndienste für das Netzwerk bereitstellen;
- mindestens eine Zelle (24), die ein Konfigurations-Rendering-Engine-Modul (36), das mit dem Kern (22) verbunden ist, umfasst; und
mindestens ein mit der Zelle (24) verbundenes Netzwerkelement (26), wobei jedes Netzwerkelement (26) mindestens ein physisches Element umfasst und eine Anzahl von Teilnehmern zur Bereitstellung der Dienste unterstützt;
wobei der Konfigurationssystemkern (22) eine Datenbank (32) und eine Reihe von Applikationsmodulen (34a-h) zur Verwaltung der Wechselwirkung des Konfigurationssystemkerns (22) mit externen Applikationen, Zellen (24) und Netzwerkelementen (26) umfasst, wobei eines der Module ein Konfigurationsmodul umfasst, das einen Konfigurationsbaum enthält, der Netzwerktopologieinformationen enthält, die die Konfiguration von Netzwerkelementen (26) enthalten und die alle den Teilnehmern verfügbaren Dienste; und den Ort jedes individuellen Teilnehmers in dem Netzwerk und die bestimmten Dienste, die er subskribiert, beschreiben, wobei das Konfigurationsmodul in der Lage ist, für jede Zelle (24) einen Teil des Konfigurationsbaums anzuwenden, der Netzwerktopologieinformationen enthält, die die Konfiguration von Netzwerkelementen (26), die den Teil des Netzwerks abdecken, der diese Zelle (24) und etwaige assoziierte Netzwerkelemente (26) umfasst, enthalten.

14. System nach Anspruch 13, wobei das Konfigurationsmodul in der Lage ist, durch externe Applikationen vorgenommene Änderungen an dem Konfigurationsbaum zu parsen.

15. System nach Anspruch 13 und 14, wobei jede Zelle (24) ein Konfigurations-Rendering-Engine-Modul (36) und ein Elementmanagermodul (38) umfasst, wobei das Konfigurations-Rendering-Engine-Modul (36) den Teil des Konfigurationsbaums enthält, der die Zelle (24), in der es residiert, abdeckt, und dafür ausgelegt ist, Konfigurationsinformationen für die zugeordneten Netzwerkelemente (26) zu dem Elementmanagermodul (38) zu leiten, wobei das Elementmanagermodul (38) dafür ausgelegt ist, die Endkonfiguration in den Netzwerkelementen (26) anzuwenden.

16. System nach Anspruch 15, wobei für jede Art von Netzwerkelement (26) ein Elementmanagermodul (38) vorgesehen ist.

17. System nach einem der Ansprüche 13-16, ferner umfassend einen Interapplikations-Nachrichtenbus (35), der die verschiedenen Applikationsmodule verbindet.

18. System nach einem der Ansprüche 13-17, wobei der Konfigurationssystemkern (22) außerdem ein Datenbankapplikationsschnittstellenmodul (34d) zum Bereitstellen von Datenbankspeicherung und Zugang zwischen anderen Modulen in dem Konfigurationssystemkern (22) und der Datenbank (32) umfasst.

19. System nach einem der Ansprüche 13-18, wobei der Konfigurationssystemkern (22) außerdem ein Externapplikations-Schnittstellenmodul (37) zum Bereitstellen von Systemdaten für externe Applikationen umfasst.

20. System nach einem der Ansprüche 13-19, ferner umfassend eine Script-Engine (34g) zur automatischen Ausführung von Scripts in dem Kern (22).

21. System nach einem der Ansprüche 13-20, ferner mit mindestens einem Protokollierungsmodul (34b, c) zum Protokollieren von Systemaktivität.

## Revendications

1. Procédé de configuration d'un réseau à large bande pour fournir des services de téléphone, Internet, télévision/vidéo à des abonnés, le réseau comportant un système de configuration comprenant :
- un système central (22) comprenant un système de fichiers (30), une base de données (32), un gestionnaire (33) d'éléments modulaires de système central et un groupe de modules (34a-h) fournissant des services de système central pour le réseau ;
- au moins une cellule (24) comprenant un module (36) de moteur de restitution de configuration et un module (38) de gestionnaire d'éléments connectés au système central (22) ; et
- au moins un élément de réseau (26) connecté à la cellule (24), chaque élément de réseau (26) comprenant au moins un élément physique acceptant un certain nombre d'abonnés pour la fourniture des services ;
le procédé comprenant les étapes consistant à :
- créer, dans le système central (22) du système de configuration, une arborescence de configuration globale incorporant des informations topologiques décrivant tous les services à la disposition des abonnés, ainsi que l'emplacement de chaque abonné individuel dans le réseau et les services particuliers auxquels il a souscrit ;
- pourvoir chaque cellule (24) d'une arborescence de configuration locale incorporant des informations topologiques comprenant la partie de l'arborescence de configuration globale qui décrit tous les services à la disposition des abonnés connectés à des éléments de réseau (26) dans cette cellule (24), ainsi que l'emplacement de chaque abonné individuel dans cette cellule (24) et les services particuliers auxquels il a souscrit ; et
- configurer chaque élément de réseau (26) en fonction de l'arborescence de configuration locale dans sa cellule (24) respective.

2. Procédé selon la revendication 1, les arborescences de configuration comprenant une série d'objets situés à des niveaux différents, chaque objet comprenant une fonction et des paramètres nécessaires à l'exécution de cette fonction.

3. Procédé selon la revendication 2, les objets comprenant des ensembles d'adresses IP, le procédé comprenant l'étape consistant à attribuer un ensemble d'adresses IP à un objet qui constitue un sous-réseau de son ancêtre immédiat de telle sorte que l'attribution des ensembles d'adresses IP corresponde à la topologie de réseau.

4. Procédé selon l'une quelconque des revendications précédentes, comprenant les étapes consistant à restituer l'arborescence de configuration locale en des commandes et données de configuration dans la cellule (24), et à déployer les commandes et données de configuration issues de la cellule (24) dans les éléments de réseau (26) et les abonnés.

5. Procédé selon la revendication 4, toute modification apportée à l'arborescence de configuration locale étant vérifiée dans la cellule (24) et uniquement déployée dans les éléments de réseau (26) et les abonnés une fois son exactitude vérifiée.

6. Procédé selon la revendication 4 ou 5, comprenant les étapes consistant à pourvoir la cellule (24) de l'arborescence de configuration locale sous un format générique, et à déployer les commandes de configuration sous un format propre à un dispositif.

7. Procédé selon l'une quelconque des revendications précédentes, comprenant les étapes consistant à modifier l'arborescence de configuration globale en réponse à des communications reçues d'une cellule (24) par le système central (22), à pourvoir la cellule (24) d'une arborescence de configuration locale incorporant la modification, et à déployer la configuration modifiée dans les éléments de réseau (26).

8. Procédé selon la revendication 7, comprenant en outre l'étape consistant à communiquer des informations de l'élément de réseau (26) à la cellule (24).

9. Procédé selon l'une des revendications précédentes, les services étant fournis par un fournisseur de services externe, le procédé comprenant en outre l'étape consistant, à l'instigation du fournisseur de services externe, à modifier l'arborescence de configuration globale dans le système central (22) du système de configuration au moyen d'un lien externe vers le système central (22) du système de configuration.

10. Procédé selon l'une quelconque des revendications précédentes, le système de configuration comprenant une pluralité d'éléments de réseau (26) de types différents, et chaque cellule (24) contenant un gestionnaire (38) d'éléments pour chaque type d'élément de réseau (26), le procédé comprenant l'étape consistant à fournir la partie de l'arborescence de configuration locale associée à un type d'élément de réseau (26) à un gestionnaire (38) d'éléments associé à ce type respectif d'élément de réseau (26).

11. Procédé selon l'une quelconque des revendications précédentes, l'arborescence de configuration locale contenant des instructions de configuration conditionnelles, le procédé comprenant les étapes consistant à vérifier la présence d'une condition existante au sein du système de configuration, et à sélectionner l'instruction de configuration à déployer adaptée.

12. Procédé selon la revendication 11, comprenant l'étape consistant à sélectionner une instruction de configuration différente lors d'une modification de la condition existante.

13. Système de fourniture de services de téléphone, Internet, télévision/vidéo à des abonnés par un réseau en large bande, le réseau comportant un système de configuration comprenant :
- un système central (22) comprenant un système de fichiers (30), une base de données (32), un gestionnaire (33) d'éléments modulaires de système central et un groupe de modules (34a-h) fournissant des services de système central pour le réseau ;
- au moins une cellule (24) comprenant un module (36) de moteur de restitution de configuration connecté au système central (22) ; et
- au moins un élément de réseau (26) connecté à la cellule (24), chaque élément de réseau (26) comprenant au moins un élément physique et acceptant un certain nombre d'abonnés pour la fourniture des services ;
le système central (22) du système de configuration comprenant une base de données (32) et une série de modules d'application (34a-h) destinés à gérer l'interaction du système central (22) du système de configuration avec des applications externes, des cellules (24) et des éléments de réseau (26), l'un des modules comprenant un module de configuration contenant une arborescence de configuration incorporant des informations de topologie de réseau comprenant la configuration d'éléments de réseau (26) décrivant tous les services à la disposition des abonnés, ainsi que l'emplacement de chaque abonné individuel dans le réseau et les services particuliers auxquels il a souscrit, le module de configuration étant capable de déployer dans chaque cellule (24) une partie de l'arborescence de configuration incorporant les informations de topologie de réseau comprenant la configuration d'éléments de réseau (26) couvrant la partie du réseau comprenant cette cellule (24) et tout élément de réseau (26) associé.

14. Système selon la revendication 13, le module de configuration étant capable de faire l'analyse syntaxique de modifications apportées à l'arborescence de configuration par des applications externes.

15. Système selon la revendication 13 ou 14, chaque cellule (24) comprenant un module (36) de moteur de restitution de configuration et un module (38) de gestionnaire d'éléments, le module (36) de moteur de restitution de configuration comportant la partie de l'arborescence de configuration couvrant la cellule (24) dans laquelle il réside et étant conçu pour transmettre au module (38) de gestionnaire d'éléments des informations de configuration pour les éléments de réseau (26) associés, le module (38) de gestionnaire d'éléments étant conçu pour déployer la configuration finale dans les éléments de réseau (26).

16. Système selon la revendication 15, un module (38) de gestionnaire d'éléments étant prévu pour chaque type d'élément de réseau (26).

17. Système selon l'une quelconque des revendications 13 à 16, comprenant en outre un bus (35) de messages entre applications connectant les divers modules d'application.

18. Système selon l'une quelconque des revendications 13 à 17, le système central (22) du système de configuration comprenant en outre un module (34d) d'interface base de données/applications destiné à permettre le stockage en base de données et l'accès entre d'autres modules dans le système central (22) du système de configuration et la base de données (32).

19. Système selon l'une quelconque des revendications 13 à 18, le système central (22) du système de configuration comprenant en outre un module (37) d'interface avec des applications externes destiné à fournir des données du système à des applications externes.

20. Système selon l'une quelconque des revendications 13 à 19, comprenant en outre un moteur (34g) de scripts destiné à assurer l'exécution automatisée de scripts dans le système central (22).

21. Système selon l'une quelconque des revendications 13 à 20, comprenant en outre au moins un module de consignation (34b,c) destiné à consigner l'activité du système.
